# EUROPÄISCHE PATENTSCHRIFT

(11) **EP 3 369 608 B1**
(45) Veröffentlichungstag und Bekanntmachung des Hinweises auf die Patenterteilung: **22.04.2020**
(21) Anmeldenummer: 18156216.6
(22) Anmeldetag: 12.02.2018
(51) Int. Cl.: B60M 1/30, B60M 1/04

(54) **STROMSCHIENENSYSTEM**
BUSBAR SYSTEM
SYSTÈME DE RAIL CONDUCTEUR

(30) Priorität: 02.03.2017 DE 202017101188 U
(43) Veröffentlichungstag der Anmeldung: 05.09.2018
(73) Patentinhaber: REHAU AG + Co, 95111 Rehau (DE)
(72) Erfinder: Deistler, Thomas, 95158 Kirchenlamitz (DE); Meinel, Udo, 95111 Rehau (DE)

(56) Entgegenhaltungen:
- WO-A1-00/56569
- DE-A1- 2 159 087
- DE-U1-202009 017 145
- DE-U1-202012 101 576
- JP-A- 2001 001 337
- US-A- 3 735 845
- US-A- 3 806 672
- US-A- 3 927 742
- US-A- 4 318 462

## Beschreibung

Die Erfindung betrifft ein Stromschienensystem umfassend wenigstens eine Stromschiene, wenigstens ein Abdeckelement sowie wenigstens einen Abstandshalter, wobei der Abstandshalter wenigstens ein Rastelement, eine Basis, wenigstens ein Halteelement sowie ein Klemmelement aufweist, wobei der Abstandshalter wenigstens eine Fixiervorrichtung aufweist, die wenigstens ein freies Ende des Abdeckelements fixierend übergreift und die über wenigstens ein Fixierelement mit dem Abstandshalter in Wirkverbindung steht.

Derartige Stromschienensysteme sind im Stand der Technik seit langem beschrieben.

So beschreibt beispielsweise die DE 7 018 332 (U) ein derartiges Stromschienensystem. Bei diesem Stromschienensystem ist der Abstandshalter als winkelförmiger Hohlkörper ausgebildet, mittels angeformter Nasen durch eine Drehung auf der Stromschiene selbstschließender Riegel ausgestaltet, auf die eine die Verriegelung fixierende Abdeckhaube aus Kunststoff sowie eine seitliche Abdeckplatte aus Kunststoff aufgerastet sind. Dabei soll die Abdeckhaube mittels angeformter Klemmansätze auf den an den Riegeln angeformten Nasen aufgerastet sein. Die Abstandshalter sind dabei als im Blasverfahren hergestellte Hohlkörper ausgebildet.

Weiterhin offenbart die DE 7 016 606 ein weiteres Stromschienensystem. Dieses Stromschienensystem für Stromschienen mit oberer Stromabnahmefläche weist Stromschienenabdeckungen sowie als Abstandshalter S-förmige selbstschließende Riegel aus Kunststoff auf, die den unteren Teil der hantelförmigen Stromschiene im verriegelten Zustand übergreifende Nase tragen und deren parallele und im verriegelten Zustand parallel zur Stromschiene verlaufenden Seiten mit Klemmnasen versehen sind, auf die seitliche Abdeckplatten aus Kunststoff mittels angeformter Klemmsätze aufgeklemmt sind.

Diese Stromschienensysteme haben sich bereits über viele Jahre bewährt und weisen gegenüber Stromschienensystemen, bei denen die Abstandshalter sowie die Abdecksysteme aus Holz oder anderen korrosionsanfälligen Werkstoffen hergestellt sind, entscheidende Vorteile auf.

Im Rahmen der weiteren Entwicklungen sind jedoch die Anforderungen an die Festigkeit der einzelnen Komponenten dieser Stromschienensysteme gestiegen, wobei gleichzeitig insbesondere die erforderlichen Montagezeiten sowie auch die Herstellungskosten reduziert werden müssen.

Bei modernen Stromschienensystemen müssen die einzelnen Komponenten so hergestellt bzw. konstruiert sein, dass sie multifunktional einsetzbar sind, dass die Montage zu allen Jahreszeiten und in allen Klimazonen einfach, schnell und ohne Verwechslungen realisierbar ist, dass die montierten Stromschienensysteme den langjährigen mechanischen, elektrischen sowie temperaturabhängigen Belastungen standhalten und jederzeit schnell sowie reversibel reparierbar bzw. austauschbar sind.

Die US 3,735,845 A offenbart ein Stromschienensystem umfassend eine von oben bestrichene Stromschiene, wenigstens ein Abdeckelement sowie wenigstens einem Abstandshalter, wobei der Abstandshalter wenigstens ein Rastelement, eine Basis, wenigstens ein Halteelement sowie ein Klemmelement aufweist, wobei der Abstandshalter wenigstens eine Fixiervorrichtung aufweist, die wenigstens ein freies Ende des Abdeckelements fixierend übergreift und die über wenigstens ein Fixierelement mit dem Abstandshalter in Wirkverbindung steht.

Die US 4,318,462 A offenbart ebenfalls ein von oben bestrichenes Stromschienensystem mit einer Stromschiene, einen Abstandshalter sowie den Abdeckungen, wobei der Abstandshalter über ein Befestigungselement die Stromschiene fixierend umgreift und wobei die Abdeckungen über Schrauben mit dem Abstandshalter verbunden sind und wobei die Fixierelemente über Sicherungssplinte fixiert sind. Weiterhin ist die Abdeckung in zwei voneinander getrennten Abdeckelementen auszubilden und diese über Schrauben, gesichert mit Splinten, am Abstandshalter zu fixieren. Ebenfalls ist die Stromschiene über ein separates Befestigungselement direkt am Abstandshalter über eine Schraube zu fixieren.

Die DE 2159087 A1 offenbart ein Stromschienensystem mit drei Stromschienen, einem Abdeckelement sowie wenigstens einem Abstandshalter, wobei der Abstandshalter wenigstens ein Rastelement, eine Basis, wenigstens ein Halteelement sowie ein Klemmelement aufweist, wobei der Abstandshalter wenigstens eine Fixiervorrichtung (mit zwei Schrauben verschraubter Blechstreifen ohne Bezugszeichen) aufweist, die wenigstens ein freies Ende des Abdeckelements fixierend übergreift und die über wenigstens ein Fixierelement mit dem Abstandshalter in Wirkverbindung steht, wobei die Abdeckungen an ihren Stirnseiten über einen schmalen Streifen und zusätzliche Schrauben miteinander fixiert sind.

Die JP 2001 001337 A offenbart ein von oben bestrichenes Stromschienensystem mit einem Halteelement, einer von oben bestrichenen Stromschiene, einer direkt daran fixierten Abdeckung sowie einer weiteren, gegenüberliegend am Haltelement angeordneten Abdeckung. Ein erstes Abdeckelement wird über Schrauben direkt am Abstandshalter fixiert, während ein zweites Abdeckelement über ein Fixierelement und eine Schraube direkt an der Stromschiene angeordnet, die Abdeckung fixierend, positioniert ist.

Hier setzt die Erfindung ein, die sich die Aufgabe gestellt hat, die Nachteile des bekannten Standes der Technik zu überwinden und ein Stromschienensystem aufzuzeigen, das kostengünstig und wirtschaftlich herstellbar ist, das eine sehr kompakte Baugröße aufweist, das einfach, unverwechselbar sowie werkzeuglos montierbar bzw. demontierbar ist und einen sicheren sowie störungsfreien Dauerbetrieb ermöglicht.

Erfindungsgemäß wird diese Aufgabe durch die Merkmale des Anspruches 1 gelöst. Weitere vorteilhafte Ausgestaltungen der Erfindung sind in den Unteransprüchen beschrieben.

Durch diese erfindungsgemäße Ausgestaltung ist es möglich, ein Stromschienensystem zur Verfügung zu stellen, das eine sehr kompakte Bauweise aufweist, das sehr einfach sowie unverwechselbar montierbar ist und bei dem insbesondere die Montage der Abstandshalter sowie der Abdeckelemente werkzeuglos erfolgen kann.

Eine weiter vorteilhafte Ausführung des Stromschienensystems besteht darin, dass das Halteelement des Abstandshalters über eine Traverse von der Basis des Abstandshalters beabstandet angeordnet ist. Neben der kostengünstigen sowie wirtschaftlichen Herstellung insbesondere des Abstandshalters ist es durch diese Ausgestaltung des Stromschienensystems möglich, unterschiedliche Abdeckelemente mit der gleichen Fixiervorrichtung werkzeuglos zu fixieren.

Es hat sich weiterhin als vorteilhaft herausgestellt, dass das Halteelement des Abstandshalters eine Basis mit wenigstens einer Aufnahmeöffnung aufweist. Hierdurch ist der Abstandshalter wirtschaftlich und kostengünstig herstellbar und durch die Anordnung bzw. Dimensionierung der Aufnahmeöffnung sind sowohl unterschiedliche Fixiervorrichtungen als auch unterschiedliche Abdecksysteme mit dem gleichen Abstandshalter montierbar.

Gemäß dem erfindungsgemäßen Stromschienensystem weist das Halteelement des Abstandshalters eine Basis mit wenigstens einem Haltesteg auf. In dieser vorteilhaften Ausgestaltung ist das erfindungsgemäße Stromschienensystem so ausgebildet, dass sich die Fixiervorrichtung wenigstens teilweise an wenigstens einem Haltestegen abstützt.

Dabei hat es sich weiterhin als vorteilhaft herausgestellt, dass der Haltesteg des Halteelements des Abstandshalters von der Traverse des Abstandshalters beabstandet angeordnet ist. Dadurch ist es vorteilhafterweise möglich, dass unterschiedlich dimensionierte Fixiervorrichtungen zwischen dem Haltesteg des Halteelements sowie der Traverse des Abstandshalters abstützend anordenbar sind.

Das erfindungsgemäße Stromschienensystem ist so ausgebildet, dass die Fixiervorrichtung eine Basis aufweist mit wenigstens einem daran angeordneten Arretierelement. Durch diese Ausführungsform ist es möglich, das erfindungsgemäße Stromschienensystem so zu montieren, dass die Fixiervorrichtung sowohl an der richtigen Stelle als auch in der richtigen Position angeordnet ist und die jeweiligen Abdeckelemente fixiert.

Die Erfindung sieht vor, dass die Fixiervorrichtung zwei, an der Basis, einander gegenüberliegend angeordnete, Fixierstege aufweist. Hierdurch wird bei dem erfindungsgemäßen Stromschienensystem neben der einfachen, schnellen und werkzeuglosen Montage auch eine bei bestimmungsgemäßer Nutzung denkbare Entrastung wirkungsvoll verhindert.

Dabei ist das erfindungsgemäße Stromschienensystem auch so ausgebildet, dass die Fixiervorrichtung zwei, einander gegenüberliegend, an den Fixierstegen angeordnete, Fixierelemente aufweist. Diese ermöglichen eine erhöhte Sicherheit des montierten, erfindungsgemäßen Stromschienensystems.

Die Erfindung sieht vor, dass der Abstandshalter wenigstens ein, mit der Stromschiene in Wirkverbindung stehendes, erstes Rastelement aufweist. Hierdurch ist der Abstandshalter auf der Stromschiene des erfindungsgemäßen Stromschienensystems einfach und werkzeuglos anordenbar.

Weiterhin vorteilhaft ist, dass der Abstandshalter wenigstens eine, die Stromschiene wenigstens teilweise aufnehmende Nut aufweist. In dieser vorteilhaften Ausgestaltung ist es sehr einfach möglich, den Abstandshalter auf der Stromschiene vorzufixieren und diesen dann über das erste Rastelement endgültig zu fixieren.

Eine ebenfalls vorteilhafte Ausführungsform des erfindungsgemäßen Stromschienensystems ist so ausgebildet, dass der Abstandshalter wenigstens eine, den Profilfuß des Basisprofils der Stromschiene aufnehmende, Nut aufweist. In dieser vorteilhaften Ausführungsform ist der Abstandshalter werkzeuglos und unverwechselbar am Profilfuß der Stromschiene angeordnet über das erste Rastelement fixierbar.

Es hat sich weiterhin als vorteilhaft herausgestellt, dass am Klemmelement des Abstandshalters wenigstens ein zweites Rastelement angeordnet ist. In dieser vorteilhaften Ausführungsform ist es somit möglich, dass ein entsprechend ausgebildetes freies Ende eines Abdeckelementes das zweite Rastelement des Abstandshalters rastend hintergreift.

Das erfindungsgemäße Stromschienensystem weist weiterhin den Vorteil auf, dass das Klemmelement des Abstandshalters wenigstens teilweise mit dem Profilfuß sowie dem Profilkopf des Basisprofils der Stromschiene in Wirkverbindung steht. Hierdurch ist das erfindungsgemäße Stromschienensystem in seinem komplett montieren Zustand stabilisiert, da bei bestimmungsgemäßem Einsatz des erfindungsgemäßen Stromschienensystems die Abdeckelemente sich über mehrere 100 m voneinander erstrecken und so eine erhöhte mechanische bzw. thermische Beanspruchung entsteht, die das erfindungsgemäße Stromschienensystem problemlos meistert.

Dabei hat es sich weiterhin als vorteilhaft herausgestellt, dass das Klemmelement des Abstandshalters vom Profilsteg des Basisprofils der Stromschiene beabstandet angeordnet ist. Hierdurch ist der Abstandshalter auf der Stromschiene des erfindungsgemäßen Stromschienensystems schnell sowie werkzeuglos montierbar und bei bestimmungsgemäßem Einsatz des erfindungsgemäßen Stromschienensystems ist auftretendes Regenwasser über die Stromschiene problemlos ableitbar.

Ebenfalls vorteilhaft bei dem erfindungsgemäßen Stromschienensystem ist, dass wenigstens ein freies Ende des Abdeckelementes das Arretierelement der Fixiervorrichtung hintergreift. Hierdurch ist eine schnelle, einfache und werkzeuglose Montage des erfindungsgemäßen Stromschienensystems jederzeit möglich.

Eine ebenfalls vorteilhafte Ausführungsform des erfindungsgemäßen Stromschienensystems ist so ausgebildet, dass wenigstens ein freies Ende des Abdeckelementes wenigstens ein Rastelement des Abstandshalters rastend hintergreift. Hierdurch ist das erfindungsgemäße Stromschienensystem schnell, effizient und sicher montierbar.

Es hat sich bei dem erfindungsgemäßen Stromschienensystem auch als vorteilhaft herausgestellt, dass ein freies Ende des Abdeckelements die Stromschiene in ihrer Längsrichtung wenigstens teilweise abdeckend übergreift. Hierdurch kann das erfindungsgemäße Stromschienensystem bei seinem bestimmungsgemäßen Einsatz beispielsweise vor Niederschlägen geschützt werden. Es liegt jedoch auch im Rahmen der Erfindung, dass das freie Ende des Abdeckelements die Stromschiene in ihrer Längsrichtung vollflächig abdeckend übergreift.

In einer ebenfalls vorteilhaften Ausführungsform ist das erfindungsgemäße Stromschienensystem so ausgebildet, dass die Basis und / oder das Klemmelement und / oder die Traverse und / oder das Halteelement im Querschnitt etwa Doppel-T-förmig ausgebildet sind. Durch diese geometrische Dimensionierung ist das erfindungsgemäße Stromschienensystem den Anforderungen an einen störungsfreien Dauerbetrieb hinsichtlich der Festigkeit sowie der Stabilisierung wirkungsvoll dimensioniert bzw. anpassbar.

Ein weiterer Vorteil des erfindungsgemäßen Stromschienensystems besteht darin, dass die Basis des Halteelements über die Traverse einstückig mit der Basis des Abstandshalters verbunden ist. Hierdurch ist insbesondere der Abstandshalter des erfindungsgemäßen Stromschienensystems kostengünstig und wirtschaftlich herstellbar.

Das erfindungsgemäße Stromschienensystem ist vorteilhafterweise so ausgebildet, dass die Fixiervorrichtung über das Abdeckelement vom Abstandshalter beabstandet angeordnet ist.

Das Stromschienensystem ist weiterhin so ausgebildet, dass die Fixiervorrichtung an der, der Stromschiene gegenüberliegend angeordneten, Außenseite des Abstandshalters über das Abdeckelement beabstandet angeordnet ist.

Das erfindungsgemäße Stromschienensystem ist weiterhin vorteilhafterweise so ausgebildet, dass sowohl der Abstandshalter als auch die Fixiervorrichtung sowie das Abdeckelement als einfach dimensionierbare Teile darstellbar bzw. herstellbar sind und beispielsweise aus polymeren bzw. duromeren Materialien herstellbar ist.

Unter polymeren Materialien sind Materialien wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien gemeint.
Dabei können dem polymeren Werkstoff geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen.

Ebenfalls vorteilhaft bei dem erfindungsgemäßen Stromschienensystem ist, dass der Abstandshalter als Formteil im an sich bekannten Spritzgießverfahren kostengünstig und wirtschaftlich herstellbar ist. Es liegt jedoch auch im Rahmen der Erfindung, dass der Abstandshalter des erfindungsgemäßen Stromschienensystems als Profil ausgebildet und im an sich bekannten Extrusionsverfahren herstellbar ist.
Hierzu sind die jeweiligen Fixiervorrichtungen der entsprechenden Geometrie, insbesondere der Breite des Abstandshalters des erfindungsgemäßen Stromschienensystems anzupassen

Die Erfindung soll nun an diesen nicht einschränkten Ausführungsbeispielen näher beschrieben werden.

Es zeigen:
- Fig. 1:: Vorderansicht eines erfindungsgemäßen Stromschienensystems;
- Fig. 2:: perspektivische Darstellung eines Abstandshalters des erfindungsgemäßen Stromschienensystems;
- Fig. 3:: perspektivische Darstellung einer Fixiervorrichtung des erfindungsgemäßen Stromschienensystems.

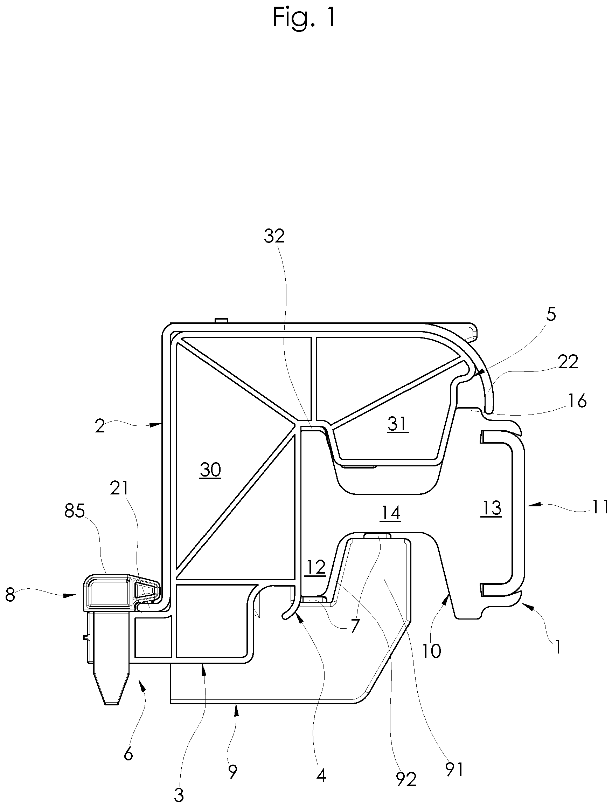

In der Fig. 1 ist eine Vorderansicht des erfindungsgemäßen Stromschienensystems dargestellt.
Das Stromschienensystem umfasst wenigstens eine Stromschiene 1, ein Abdeckelement 2, wenigstens einen Abstandshalter 3 sowie eine Befestigungsvorrichtung 9.

Die Stromschiene 1 ist in diesem Ausführungsbeispiel so ausgebildet, dass sie ein Basisprofil 10 aufweist mit einem Profilfuß 12, einem Profilkopf 13 sowie einen diese verbindenden Profilsteg 14.
An der dem Profilfuß 12 des Basisprofils 10 gegenüberliegenden Seite der Stromschiene 1 ist ein Gleitflächenprofil 11 angeordnet, an dem ein nicht dargestellter Stromabnehmer einer elektrischen Bahn anordenbar ist.
Der Profilkopf 13 der Stromschiene weist an seine beiden freien Enden Verdickungen 16 auf, welche die Querschnittsfläche der Stromschiene 1 vergrößern.

Der Abstandshalter 3 weist wenigstens ein Rastelement 4, 5, eine Basis 30, ein Halteelement 6 sowie ein Klemmelement 31 auf.
Weiterhin weist der Abstandshalter 3 eine Fixiervorrichtung 8 auf, die wenigstens ein freies Ende 21 des Abdeckelements 2 fixierend übergreift.
Die Fixiervorrichtung 8 steht über wenigstens ein (nicht sichtbares) Fixierelement mit dem Abstandshalter 3 in Wirkverbindung.
Die Fixiervorrichtung 8 ist dabei als separates, in das Halteelement 6 des Abstandshalters 3 einbringbares, Formteil ausgebildet.
Weiterhin weist die Fixiervorrichtung 8 ein Arretierelement 85 auf, welches das freie Ende 21 des Abdeckelements 2 fixierend überdeckt.

Der Abstandshalter 3 weist ein, mit der Stromschiene 1 in Wirkverbindung stehendes, erstes Rastelement 4 auf.
Weiterhin weist der Abstandshalter 3 eine, die Stromschiene 1 wenigstens teilweise aufnehmende Nut 32 auf.

In diesem Ausführungsbeispiel ist der Abstandshalter 3 des erfindungsgemäßen Stromschienensystems so ausgebildet, dass er eine, den Profilfuß 12 des Basisprofils 10 der Stromschiene 1 aufnehmende, Nut 32 aufweist.

Das Klemmelement 31 des Abstandshalters 3 steht mit dem Profilfuß 12 und dem Profilkopf 13 des Basisprofils 10 der Stromschiene 1 wenigstens teilweise in Wirkverbindung. Durch diese vorteilhafte Ausgestaltung sowie der hinterrastenden Funktion des ersten Rastelements 4 am Profilfuß 12 des Basisprofils 10 der Stromschiene 1 ist der Abstandshalter 3 an der Stromschiene 1 fixiert.

Die Stromschiene 1 selbst ist an einer Befestigungsvorrichtung 9 fixiert angeordnet.
In diesem Ausführungsbeispiel ist die Befestigungsvorrichtung 9 so ausgebildet, dass sie ein Aufnahmeelement 91 aufweist, auf dem der Profilsteg 14 des Basisprofils 10 der Stromschiene 1 über ein Dämpfungselement 7 beabstandet angeordnet ist.
Weiterhin weist die Befestigungsvorrichtung 9 eine den Profilfuß 12 des Basisprofils 10 der Stromschiene 1 aufnehmende Nut 92 auf, wobei der Profilfuß 12 des Basisprofils 10 der Stromschiene 1 über ein weiteres Dämpfungselement 7 beabstandet angeordnet ist.

Am Abstandshalter 3 des erfindungsgemäßen Stromschienensystems ist eine, seiner äußeren Fläche überdeckendes, Abdeckelement 2 angeordnet.
Das Abdeckelement 2 des erfindungsgemäßen Stromschienensystems ist in diesem Ausführungsbeispiel so ausgebildet, dass ein freies Ende 21 des Abdeckelementes 2 das Arretierelement 85 der Fixiervorrichtung 8 untergreift.
Das Abdeckelement 2 des erfindungsgemäßen Stromschienensystems ist weiterhin so ausgebildet, dass das freie Ende 22 die Stromschiene 1 in ihrer Längsrichtung vollflächig abdeckend übergreift.
Es liegt jedoch auch im Rahmen der Erfindung, dass das freie Ende 22 des Abdeckelements 2 so ausgebildet ist, das es das zweite Rastelement 5 des Abstandshalters 3 rastend hintergreift.

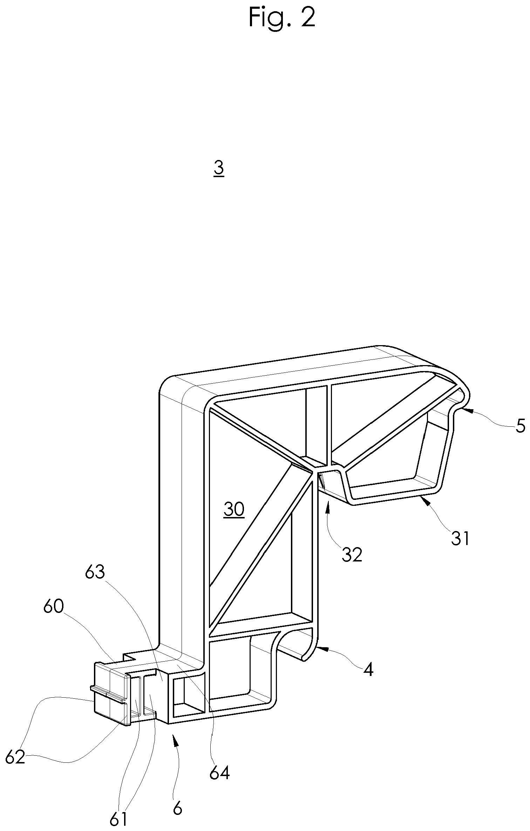

In der Fig. 2 ist eine perspektivische Darstellung eines Abstandshalters 3 des erfindungsgemäßen Stromschienensystems dargestellt.

Der Abstandshalter 3 weist eine Basis 30, ein Halteelement 6, ein Klemmelement 31 sowie Rastelemente 4, 5 auf.

Das Klemmelement 31 ist über die Nut 32 von der Basis 30 des Abstandshalters 3 beabstandet angeordnet und weist an seiner der Basis 30 gegenüberliegenden Seite das zweite Rastelement 5 auf.
An der Basis 30 des Abstandshalters 3 ist an dem, der Nut 32 gegenüberliegenden, Ende das erste Rastelement 4 angeordnet.

Der Abstandshalter 3 des erfindungsgemäßen Stromschienensystems ist weiterhin so ausgebildet, dass er an der, dem ersten Rastelement 4 gegenüberliegenden, Seite der Basis 30 das Halteelement 6 aufweist.
Das Halteelement 6 ist so ausgebildet, dass es eine Basis 60 aufweist mit wenigstens einer Aufnahmeöffnung 61 sowie mit wenigstens einem Haltesteg 62.

In diesem Ausführungsbeispiel ist die Basis 60 des Halteelementes 6 über die Traverse 64 von der Basis 30 des Abstandshalters 3 beabstandet angeordnet.
Es liegt jedoch auch im Rahmen der Erfindung, dass die Basis 60 des Halteelementes 6 direkt an der Basis 30 des Abstandshalters 3 angeordnet ist.
Die Aufnahmeöffnung 61 in der Basis 60 des Haltelementes 6 ist im Querschnitt etwa prismatisch ausgebildet und vertikal, parallel zum Haltesteg 62 angeordnet.

Der Haltesteg 62 an der Basis 60 des Halteelements 6 ist in diesem Ausführungsbeispiel von der Seitenwand 63 der Traverse 64 beabstandet angeordnet.

Bei bestimmungsgemäßer Verwendung des erfindungsgemäßen Stromschienensystems wird die nicht dargestellte Fixiervorrichtung so an der Basis 60 des Halteelements 6 angeordnet, dass sie das nicht dargestellte freie Ende des Abdeckelements fixierend übergreift.

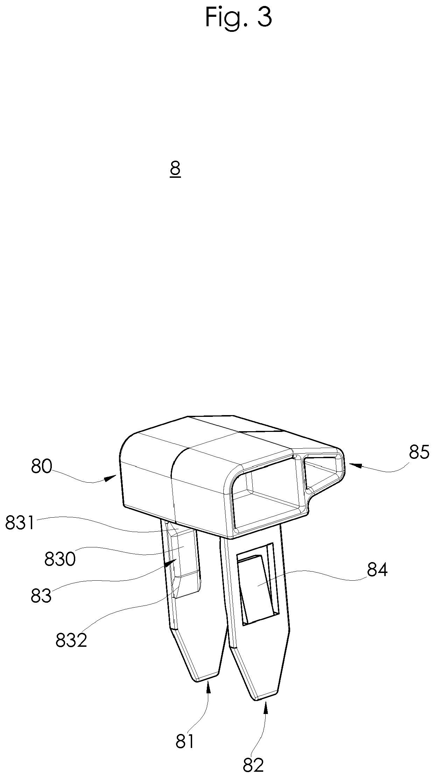

In der Fig. 3 ist eine perspektivische Darstellung einer Fixiervorrichtung 8 des erfindungsgemäßen Stromschienensystems dargestellt.

Die Fixiervorrichtung 8 weist eine Basis 80 auf mit wenigstens einem daran angeordneten Arretierelement 85. In diesem Ausführungsbeispiel ist das Arretierelement 85 einstückig an der Basis 80 der Fixiervorrichtung 8 angeordnet.
Die Fixiervorrichtung 8 ist weiterhin so ausgebildet, dass sie wenigstens einen, an der Basis 80 angeordneten, Fixiersteg 81, 82 aufweist.

In diesem Ausführungsbeispiel ist die Fixiervorrichtung 8 des erfindungsgemäßen Stromschienensystems so ausgebildet, dass sie zwei, an der Basis 80, einander gegenüberliegend angeordnete, Fixierstege 81, 82 aufweist.
Die Breite der Fixierstege 81, 82 der Fixiervorrichtung 8 ist so gewählt, dass sie in etwa dem Abstand zwischen dem Haltesteg 6 des Halteelements 6 sowie der Seitenwand 63 der Traverse 64 des nicht dargestellten Abstandshalters entspricht.

Die Fixiervorrichtung 8 ist weiterhin so ausgebildet, dass sie zwei, einander gegenüberliegend, an den Fixierstegen 81, 82 angeordnete, Fixierelemente 83, 84 aufweist.
In diesem Ausführungsbeispiel ist ein erstes Fixierelement 83 am ersten Fixiersteg 81 so ausgebildet, dass es eine Basis 830 aufweist an deren freien Enden jeweils eine Anlaufschräge 831, 832 angeordnet ist.

Das zweite Fixierelement 84 am zweiten Fixiersteg 82 ist in diesem Ausführungsbeispiel als Rasthaken ausgebildet.

Die Fixiervorrichtung 8 ist weiter so ausgebildet, dass das am Fixiersteg 81, 82 angeordnete Fixierelement 83, 84 von der Basis 80 beabstandet angeordnet ist.

Bei bestimmungsgemäßem Einsatz des erfindungsgemäßen Stromschienensystems ist die Fixiervorrichtung 8 so am Halteelement 6 des Abstandshalters 3 angeordnet, dass das Fixierelement 83, 84 die Aufnahmeöffnung 61 des Halteelements 6 rastend hintergreift.

## Patentansprüche

1. Stromschienensystem umfassend wenigstens eine Stromschiene (1), wenigstens ein Abdeckelement (2) sowie wenigstens einen Abstandshalter (3) zum von der Stromschiene (1) beabstandeten Halten des Abdeckelements (2), wobei der Abstandshalter (3) wenigstens ein Rastelement (4, 5), eine Basis (30), wenigstens ein Haltelement (6) sowie ein Klemmelement (31) zum Klemmen der Stromschiene (1) aufweist, wobei der Abstandshalter (3) wenigstens eine Fixiervorrichtung (8) aufweist, die wenigstens ein freies Ende (21, 22) des Abdeckelements (2) fixierend übergreift und die über wenigstens ein Fixierelement (83, 84) mit dem Abstandshalter (3) in Wirkverbindung steht, wobei das Fixierelement (83, 84) der Fixiervorrichtung (8) an das Halteelement (6) eine Basis (60) mit wenigstens einem Haltesteg (62) aufweist, wobei die Fixiervorrichtung (8) eine Basis (80) aufweist mit wenigstens einem daran angeordneten Arretierelement (85), welches das freie Ende des Abdeckelements (2) fixierend überdeckt, **dadurch gekennzeichnet, dass** die Fixiervorrichtung (8) zwei, an der Basis (80), einander gegenüberliegend angeordnete, Fixierstege (81, 82) aufweist, dass die Fixiervorrichtung (8) zwei, einander gegenüberliegend, an den Fixierstegen (81, 82) angeordnete, Fixierelemente (83, 84) aufweist, die wenigstens eine Aufnahmeöffnung (61) des Halteelementes (6) des Abstandshalters (3) rastend hintergreifen.

2. Stromschienensystem nach Anspruch 1, **dadurch gekennzeichnet, dass** das Halteelement (6) des Abstandshalters (3) die Basis (60) des Halteelements (6) mit wenigstens einer Aufnahmeöffnung (61) aufweist.

3. Stromschienensystem nach einem der vorhergehenden Ansprüche, **dadurch gekennzeichnet, dass** der Abstandshalter (3) wenigstens eine, die Stromschiene (1) wenigstens teilweise aufnehmende Nut (32) aufweist.

4. Stromschienensystem nach einem der vorhergehenden Ansprüche, **dadurch gekennzeichnet, dass** der Abstandshalter (3) wenigstens eine, einen Profilfuß (12) eines Basisprofils (10) der Stromschiene (1) aufnehmende, Nut (32) aufweist.

5. Stromschienensystem nach einem der vorhergehenden Ansprüche, **dadurch gekennzeichnet, dass** am Klemmelement (31) des Abstandshalters (3) wenigstens ein zweites Rastelement (5) angeordnet ist.

6. Stromschienensystem nach einem der vorhergehenden Ansprüche, **dadurch gekennzeichnet, dass** das Klemmelement (31) des Abstandshalters (3) wenigstens teilweise mit einem Profilfuß (12) und einem Profilkopf (13) eines Basisprofils (10) der Stromschiene (1) in Wirkverbindung steht.

7. Stromschienensystem nach einem der vorhergehenden Ansprüche, **dadurch gekennzeichnet, dass** das Klemmelement (31) des Abstandshalters (3) von einem Profilsteg (14) eines Basisprofils (10) der Stromschiene (1) beabstandet angeordnet ist.

8. Stromschienensystem nach einem der vorhergehenden Ansprüche, **dadurch gekennzeichnet, dass** ein freies Ende (22) des Abdeckelements (2) die Stromschiene (1) in ihrer Längsrichtung wenigstens teilweise abdeckend übergreift.

## Claims

1. Conductor rail system comprising at least one conductor rail (1), at least one cover element (2) and at least one spacer (3) for holding the cover element (2) at a distance from the conductor rail (1), wherein the spacer (3) comprises at least one latch element (4, 5), a base (30), at least one holding element (6) and a clamping element (31) for clamping the conductor rail (1), wherein the spacer (3) comprises at least one securing device (8) that engages over at least one free end (21, 22) of the cover element (2) in a securing manner and is operatively connected to the spacer (3) by way of at least one securing element (83, 84), wherein the securing element (83, 84) of the securing device (8) engages behind on at least one receiving aperture (61) of the holding element (6) of the spacer (3) in a latching manner, wherein the holding element (6) comprises a base (60) with at least one holding bar (62), wherein the securing device (8) comprises a base (80) with at least one locking element (85) arranged thereon, which covers the free end of the cover element (2) in a securing manner, **characterised in that** the securing device (8) comprises two securing bars (81, 82) arranged opposite each other on the base (80), **in that** the securing device (8) comprises two securing elements (83, 84) arranged opposite each other on the securing bars (81, 82), said securing elements (83, 84) engaging behind at least one receiving aperture (61) of the holding element (6) of the spacer (3) in a latching manner.

2. Conductor rail system according to claim 1, **characterised in that** the holding element (6) of the spacer (3) comprises the base (60) of the holding element (6) with at least one receiving aperture (61).

3. Conductor rail system according to one of the preceding claims, **characterised in that** the spacer (3) comprises at least one groove (32) that at least partly accommodates the conductor rail (1).

4. Conductor rail system according to one of the preceding claims, **characterised in that** the spacer (3) comprises at least one groove (32) that accommodates a profile foot (12) of a base profile (10) of the conductor rail (1).

5. Conductor rail system according to one of the preceding claims, **characterised in that** at least a second latch element (5) is arranged on the clamping element (31) of the spacer (3).

6. Conductor rail system according to one of the preceding claims, **characterised in that** the clamping element (31) of the spacer (3) is at least partly operatively connected to a profile foot (12) and a profile head (13) of a base profile (10) of the conductor rail (1).

7. Conductor rail system according to one of the preceding claims, **characterised in that** the clamping element (31) of the spacer (3) is arranged at a distance from a profile web (14) of a base profile (10) of the conductor rail (1).

8. Conductor rail system according to one of the preceding claims, **characterised in that** a free end (22) of the cover element (2) at least partly engages in a covering manner over the conductor rail (1) in the longitudinal direction thereof.

## Revendications

1. Système de rail conducteur comprenant au moins un rail conducteur (1), au moins un élément de recouvrement (2) ainsi qu'au moins un élément d'écartement (3) pour le maintien espacé du rail conducteur (1) de l'élément de recouvrement (2), l'élément d'écartement (3) comportant au moins un élément d'encliquetage (4, 5), une base (30), au moins un élément de retenue (6) ainsi qu'un élément de serrage (31) pour serrer le rail conducteur, l'élément d'écartement (3) comportant au moins un dispositif de fixation (8), qui chevauche en la fixant au moins une extrémité libre (21, 22) de l'élément de recouvrement (2) et qui est en liaison fonctionnelle avec l'élément d'écartement (3) par le biais d'au moins un élément de fixation (83, 84), dans lequel l'élément de fixation (83, 84) du dispositif de fixation (8), à au moins une orifice de réception (61) de l'élément de retenue (6) de l'élément de fixation (3) vient en prise par derrière en s'encliquetant, dans l'élément de fixation comporte une base (60) dotée d'au moins une barrette de retenue (62), le dispositif de fixation (8) comportant une base (80) dotée d'au moins un élément de blocage (85) disposé sur celle-ci, qui recouvre en la fixant l'extrémité libre de l'élément de recouvrement (2), **caractérisé en ce que** le dispositif de fixation (8) comporte deux branches de fixation (81, 82) disposées opposées l'une à l'autre sur la base (80), **en ce que** le dispositif de fixation (8) comporte deux éléments de fixation (83, 84) disposés opposés l'un à l'autre sur les branches de fixation (81, 82), et qui viennent en prise par derrière en s'encliquetant dans au moins un orifice de réception (61) de l'élément de retenue (6) de l'élément d'écartement (3).

2. Système de rail conducteur selon la revendication 1, **caractérisé en ce que** l'élément de retenue (6) de l'élément d'écartement (3) comporte la base (60) de l'élément de retenue (6) dotée d'au moins un orifice de réception (61).

3. Système de rail conducteur selon l'une des revendications précédentes, **caractérisé en ce que** l'élément d'écartement (3) comporte au moins une rainure (32) recevant au moins en partie le rail conducteur (1).

4. Système de rail conducteur selon l'une des revendications précédentes, **caractérisé en ce que** l'élément d'écartement (3) comporte au moins une rainure (32) recevant un pied de profilé (12) d'un profilé de base (10) du rail conducteur (1).

5. Système de rail conducteur selon l'une des revendications précédentes, **caractérisé en ce qu'**au moins un second élément d'encliquetage (5) est disposé sur l'élément de serrage (31) de l'élément d'écartement (3).

6. Système de rail conducteur selon l'une des revendications précédentes, **caractérisé en ce que** l'élément de serrage (31) de l'élément d'écartement (3) est en liaison fonctionnelle au moins en partie avec un pied de profilé (12) et une tête de profilé (13) d'un profilé de base (10) du rail conducteur (1).

7. Système de rail conducteur selon l'une des revendications précédentes, **caractérisé en ce que** l'élément de serrage (31) de l'élément d'écartement (3) est disposé espacé d'une âme de profilé (14) d'un profilé de base (10) du rail conducteur (1).

8. Système de rail conducteur selon l'une des revendications précédentes, **caractérisé en ce qu'**une extrémité libre (22) de l'élément de recouvrement (2) chevauche le rail conducteur (1) en le recouvrant au moins en partie dans sa direction longitudinale.
